# EUROPÄISCHE PATENTSCHRIFT

(11) **EP 4 061 572 B1**
(45) Veröffentlichungstag und Bekanntmachung des Hinweises auf die Patenterteilung: **12.07.2023**
(21) Anmeldenummer: 20804304.2
(22) Anmeldetag: 17.11.2020
(51) Int. Cl.: B23K 9/127, B23K 9/235, B23K 9/32

(54) **VERFAHREN ZUM ABTASTEN DER OBERFLÄCHE METALLISCHER WERKSTÜCKE**
METHOD FOR SCANNING THE SURFACE OF METALLIC WORKPIECES
PROCÉDÉ DE BALAYAGE DE LA SURFACE DES PIÈCES MÉTALLIQUES

(30) Priorität: 18.11.2019 EP 19209712
(43) Veröffentlichungstag der Anmeldung: 28.09.2022
(73) Patentinhaber: FRONIUS INTERNATIONAL GmbH, 4643 Pettenbach (AT)
(72) Erfinder: MAYER, Manuel, 4643 Pettenbach (AT); WALDHÖR, Andreas, 4643 Pettenbach (AT); BINDER, Manuel, 4643 Pettenbach (AT)
(74) Vertreter: SONN Patentanwälte OG
(86) Internationale Anmeldenummer: PCT/EP2020/082327
(87) Internationale Veröffentlichungsnummer: WO 2021/099287

(56) Entgegenhaltungen:
- WO-A1-2007/115342
- WO-A1-2019/002141
- JP-A- H04 143 074
- JP-A- 2017 100 179

## Beschreibung

Die Erfindung betrifft ein Verfahren zum Abtasten der Oberfläche metallischer Werkstücke, wobei während eines Abtastprozesses ein Schweißbrenner mit einem abschmelzenden Schweißdraht über die Oberfläche des Werkstücks bewegt wird, und zu vorgegebenen Zeitpunkten der Schweißdraht mit einer Vorwärtsgeschwindigkeit zur Oberfläche des Werkstücks bewegt wird, bis von einer Schweißstromquelle ein Kontakt des Schweißdrahts mit dem Werkstück detektiert wird, und der Schweißdraht anschließend mit einer Rückwärtsgeschwindigkeit wieder vom Werkstück wegbewegt wird.

Der Schweißdraht eines Schweißgeräts kann vor einem Schweißprozess dazu verwendet werden, die Oberfläche der zu bearbeitenden Werkstücke abzutasten, indem der Schweißdraht als Sensor verwendet wird, indem er zu vorgegebenen Zeitpunkten in Richtung Werkstück bewegt wird, bis der Schweißdraht das Werkstück berührt und einen Kurzschluss bildet. Anschließend wird der Schweißdraht wieder vom Werkstück wegbewegt. Über die Bewegungen des Schweißdrahts, welche durch Drehgeber im Vorschubgerät erfasst werden, kann auf die Position des Schweißdrahts beim Kontakt mit dem Werkstück, und somit auf die Position der Oberfläche des Werkstücks rückgeschlossen werden.

Beispielsweise beschreibt die WO 2019/002141 A1 ein Verfahren und eine Vorrichtung zur Abtastung einer Oberfläche eines metallischen Werkstücks mit Hilfe des Schweißdrahts des Schweißbrenners. Dabei wird während des Abtastprozesses bei jedem Kurzschluss des Schweißdrahts mit dem metallischen Werkstück ein Positionswert ermittelt und gespeichert bzw. ausgegeben, welcher vom Manipulator zum Detektieren einer Kante oder einer bestimmten Position benutzt werden kann.

Am Schweißdraht kann sich nach einem Schweißprozess Schlacke bzw. Silikate ablagern (besonders bei Stahllegierungen), welche isolierend wirken. Diese Isolationsschicht am freien Ende des Schweißdrahts kann den Abtastprozess mit Hilfe des Schweißdrahts blockieren, da bei der Berührung des Schweißdrahts mit dem Werkstück kein Kurzschluss erkannt wird.

Es ist bekannt, vor einem Schweißprozess allfällige Schlacke am Ende des Schweißdrahts zu entfernen, um ein sicheres Zünden eines Lichtbogens zu gewährleisten. Zu diesem Zweck kann ein Schlacken-Entfernungsprozess vor dem Schweißverfahren angewendet werden, wobei der Schweißstrom auf ein Minimum gesenkt wird, und der Schweißdraht mit einer schnellen wiederkehrenden Vor-/Rückwärtsbewegung zyklisch eine vorgegebene Weglänge in Richtung Werkstück und um eine kleinere Wegstrecke wieder vom Werkstück wegbewegt wird, bis von einer Kurzschlussüberwachung ein Kurzschluss zwischen dem Schweißdraht und dem Werkstück erkannt wird, worauf der Schlacken-Entfernungsprozess beendet wird. Ein derartiges Verfahren wird in der EP 2 007 542 B1 beschrieben.

Die Aufgabe der vorliegenden Erfindung besteht darin, ein oben genanntes Abtastverfahren soweit zu verbessern, sodass eine sichere Erkennung eines Kurzschlusses bei der Berührung des Schweißdrahts mit dem metallischen Werkstück gewährleistet wird. Dadurch soll das Abtastverfahren möglichst rasch und unterbrechungsfrei durchführbar sein. Nachteile bekannter Verfahren sollen vermieden oder zumindest reduziert werden.

Gelöst wird die Aufgabe durch ein oben genanntes Abtastverfahren, wobei vor dem Abtastprozess ein Schlacken-Entfernungsprozess zur Entfernung von Schlacke am Ende des Schweißdrahtes durchgeführt wird, wobei mit Beginn des Schlacken-Entfernungsprozesses der Schweißstrom auf ein Minimum gesenkt wird, und der Schweißdraht mit einer schnellen wiederkehrenden Vor-/Rückwärtsbewegung zyklisch eine vorgegebene Weglänge in Richtung Werkstück und um eine kleinere Wegstrecke wieder vom Werkstück wegbewegt wird, sodass die Förderung des Schweißdrahtes zum Werkstück überwiegt, und beim Detektieren keines Kurzschlusses zwischen dem Schweißdraht und dem Werkstück der Schlacken-Entfernungsprozess wiederholt wird, und beim Detektieren mehrerer Kurzschlüsse zwischen dem Schweißdraht und dem Werkstück hintereinander der Schlacken-Entfernungsprozess beendet wird, wobei beim Sinken der Drahtvorschubgeschwindigkeit unter einen vorgegebenen Schwellwert beim Bewegen des Schweißdrahts mit einer vorgegebenen Drahtvorschubgeschwindigkeit in Richtung Werkstück vor dem Abtastprozess der Schlacken-Entfernungsprozess gestartet wird. Erfindungsgemäß ist daher vorgesehen, dass vor dem Abtastverfahren ein Schlacken-Entfernungsprozess durchgeführt wird, um sicherzustellen, dass allenfalls am freien Ende des Schweißdrahts vorhandene Schlacke entfernt werden kann und somit eine sichere Abtastung der Oberfläche des Werkstücks mit dem Schweißdraht möglich ist. Durch das mehrmalige Aufschlagen des Schweißdrahts an der Werkstückoberfläche während des Schlacken-Entfernungsprozesses wird im Allgemeinen die Schlacke am freien Ende des Schweißdrahts entfernt und die Kurzschlusserkennung während des nachfolgenden Abtastprozesses sichergestellt. Beim Detektieren keines Kurzschlusses zwischen dem Schweißdraht und dem Werkstück wird der Schlacken-Entfernungsprozess wiederholt. Dadurch wird eine sichere Entfernung der Schlacke vom Schweißdraht und danach ein fehlerfreier Abtastprozess gewährleistet. Beim Detektieren mehrerer Kurzschlüsse zwischen dem Schweißdraht und dem Werkstück hintereinander wird der Schlacken-Entfernungs-prozess beendet. Durch das Zählen von aufeinanderfolgenden Kurzschlüssen während des Schlacken-Entfernungsprozesses wird eine weitere Absicherung zur Überprüfung der vollständigen Entfernung der Schlacke vom Schweißdraht realisiert. Erst nach Überschreiten dieser definierten Anzahl von Kurzschlüssen kann davon ausgegangen werden, dass die Schlacke sicher entfernt wurde, und der Schlacken-Entfernungsprozess kann beendet werden. Der Einbruch der Drahtvorschubgeschwindigkeit unter einen vorgegebenen Schwellwert in der Startphase vor dem Abtastprozess ist ein Indiz dafür, dass sich Schlacke am Schweißdraht befindet. Beim Unterschreiten des vorgegebenen Schwellwerts der Drahtvorschubgeschwindigkeit wird also der Schlacken-Entfernungsprozess ausgelöst.

Vorteilhafterweise wird der Schlacken-Entfernungsprozess beim Detektieren von fünf Kurzschlüssen zwischen dem Schweißdraht und dem Werkstück hintereinander beendet. Nach Überschreiten von fünf Kurzschlüssen kann davon ausgegangen werden, dass die Schlacke sicher entfernt wurde, und der Schlacken-Entfernungs-prozess kann beendet werden.

Bei Detektieren keines Kurzschlusses zwischen dem Schweißdraht und dem Werkstück während einer festgelegten Zeitspanne vor dem Abtastprozess kann der Schlacken-Entfernungsprozess gestartet werden. Dies stellt eine Voraussetzung für das Einleiten eines Schlacken-Entfernungsprozesses vor dem Abtastprozess dar, um eine einwandfreie Funktionalität zu gewährleisten.

Dabei wird vorzugsweise vor der Messung, ob die Drahtvorschubgeschwindigkeit unter den vorgegebenen Schwellwert sinkt, eine vorgegebene Zeitdauer gewartet. Durch das Einhalten bestimmter Zeitvorgaben wird sichergestellt, dass Einschwingprozesse abgeklungen sind und der Schlacken-Entfernungsprozess nicht ungewollt ausgelöst wird.

Als weitere Bedingung für den Start des Schlacken-Entfernungsprozesses kann die Überschreitung der Kraft am Schweißdraht über einen vorgegebenen Maximalwert festgelegt werden. Wird beim Starten eines Abtastprozesses der Schweißdraht in Richtung Werkstück bewegt und es befindet sich Schlacke am Schweißdraht, kommt es aufgrund der isolierenden Wirkung der Schlacke zu einem messbaren Kraftanstieg beim längeren Aufschlagen des Schweißdrahts am Werkstück. Dieser Kraftanstieg kann über den Motorstrom der Motoren eines Drahtvorschubgeräts relativ einfach erfasst werden und als Voraussetzung für das Auslösen des Schlacken-Entfernungsprozesses herangezogen werden. Durch die Kombination einer der oben erwähnten Bedingungen, insbesondere dem Einbruch der Drahtvorschubgeschwindigkeit zu Beginn des Abtastprozesses mit der Kraftmessung kann das Vorliegen von Schlacke am Schweißdraht noch zuverlässiger erkannt werden und es können Fehlauslösungen des Schlacken-Entfernungsprozesses vermieden werden.

Schließlich ist es auch möglich, dass der Schlacken-Entfernungs-prozess beim Überschreiten eines vorgegebenen Maximalwerts der Kraft am Schweißdraht gestartet wird. Auch die Überschreitung eines vorgegebenen gewissen Kraftanstiegs stellt eine sinnvolle Bedingung für die Auslösung des Schlacken-Entfernungsprozesses vor einem Abtastprozess dar.

Der Schlacken-Entfernungsprozess kann auch beim Sinken der Drahtvorschubgeschwindigkeit während des Abtastprozesses unter einen vorgegebenen Schwellwert gestartet werden. Auch dies stellt eine weitere Bedingung für die Auslösung des Schlacken-Entfernungsprozesses dar. Der Schwellwert der Drahtvorschubgeschwindigkeit während des Abtastprozesses ist in der Regel unterschiedlich zu dem oben genannten Schwellwert für die Drahtvorschubgeschwindigkeit in der Startphase des Abtastprozesses.

Gemäß einem weiteren Merkmal der Erfindung wird der Schlacken-Entfernungsprozess beim Überschreiten eines vorgegebenen Maximalwerts der Kraft am Schweißdraht während des Abtastprozesses gestartet. Wie zu Beginn des Abtastprozesses kann auch während des Abtastprozesses die Überschreitung einer maximalen Kraft am Schweißdraht oder die Überschreitung eines maximalen zeitlichen Kraftanstiegs am Schweißdraht ein Indiz für das Vorliegen von Schlacke am Schweißdraht sein, welche die Auslösung eines Schlacke-Entfernungsprozesses auch während des Abtastprozesses rechtfertigt beziehungsweise notwendig macht. Die Kräfte am Schweißdraht können über den Motorstrom des Motors des Drahtvorschubgeräts erfasst werden.

Wenn der Anstellwinkel des Schweißbrenners zur Oberfläche des Werkstücks ermittelt wird, und beim Unterschreiten eines vorgegebenen Grenzwerts des Anstellwinkels der Schlacken-Entfernungs-prozess deaktiviert wird, kann die Durchführung eines ineffizienten Schlacken-Entfernungsprozesses verhindert werden. Ist nämlich der Schweißbrenner und somit der Schweißdraht zu flach zum Werkstück orientiert, kann durch ein Auslenken oder Verbiegen des Schweißdrahts die Schlacke nicht oder nicht ausreichend vom Schweißdraht entfernt werden.

Beim Detektieren keines stabilen Kurzschlusses zwischen Schweißdraht und Werkstück nach mehreren Wiederholungen des Schlacken-Entfernungsprozesses, insbesondere nach 15 Wiederholungen, kann eine Fehlermeldung ausgegeben werden. Durch die Fehlermeldung kann dem Schweißer angezeigt werden, dass es nicht gelungen ist, die Schlacke vom Schweißdraht mit Hilfe des Schlacken-Entfernungsprozesses zu entfernen und dass andere Maßnahmen notwendig sind.

Nach Ausgabe der Fehlermeldung kann beispielsweise als Maßnahme das Ende des Schweißdrahts in einer Abschneidevorrichtung abgeschnitten werden. Auf diese Weise wird auch dann, wenn vorhergehende Schlacken-Entfernungsprozesse erfolglos waren, der Schweißdraht wieder für einen Abtastprozess vorbereitet werden.

Die vorliegende Erfindung wird anhand der beigefügten Zeichnungen näher erläutert. Darin zeigen:
- Fig. 1: eine Prinzipskizze eines Schweißgeräts zur Durchführung eines Schweißprozesses und Abtastprozesses;
- Fig. 2: schematisch die Zeitverläufe der Schweißspannung, des Schweißstromes und der Vorschubgeschwindigkeit des Schweißdrahts und eines Bewegungsdiagramms des Schweißdrahts während eines Schlacken-Entfernungsprozesses;
- Fig. 3: schematisch die zeitlichen Verläufe der Drahtvorschubgeschwindigkeit und der Spannung bei einem Ausführungsbeispiel des Schlacken-Entfernungsprozesses;
- Fig. 4: schematisch die zeitlichen Verläufe der Drahtvorschubgeschwindigkeit und der Spannung bei einer alternativen Auslösebedingung für den Schlacken-Entfernungsprozess;
- Fig. 5: schematisch die zeitlichen Verläufe der Drahtvorschubgeschwindigkeit, der Kraft am Schweißdraht sowie der zeitlichen Änderung der Kraft am Schweißdraht bei einer weiteren Auslösebedingung für den Schlacken-Entfernungsprozess;
- Fig. 6: einen Schweißbrenner in einer für einen Schlacken-Entfernungsprozess gewünschter Winkellage zum Werkstück; und
- Fig. 7: einen Schweißbrenner in einer für den Schlacken-Entfernungsprozess ungeeigneten Winkellage zum Werkstück.

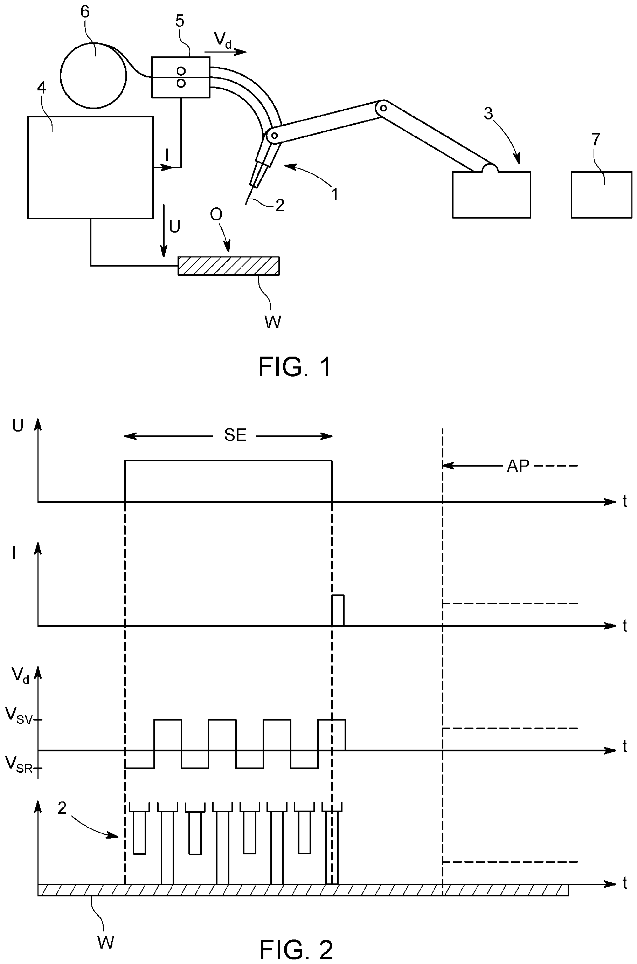

Fig. 1 zeigt eine Prinzipskizze eines Schweißgeräts zur Durchführung eines Schweißprozesses und Abtastprozesses AP. Ein Schweißbrenner 1 mit einem Schweißdraht 2 ist mit einem entsprechenden Manipulator 3, beispielsweise einem Schweißroboter verbunden. Eine Schweißstromquelle 4 versorgt den Schweißbrenner 1 bzw. den Schweißdraht 2 mit dem Schweißstrom I und der Schweißspannung U. Über ein Vorschubgerät 5 wird der Schweißdraht 2 mit einer Vorschubgeschwindigkeit v_{d} von einer Drahtrolle 6 zum Schweißbrenner 1 befördert. Während des Abtastprozesses AP wird der Schweißbrenner 1 mit dem Schweißdraht 2 mit Hilfe des Manipulators 3 entlang einer vorgegebenen Bahn und mit einer vorgegebenen Geschwindigkeit über die Oberfläche O der Werkstücke W bewegt. Zu vorgegebenen Zeitpunkten wird der Schweißdraht 2 mit einer Vorwärtsgeschwindigkeit v_{SV} zur Oberfläche O der Werkstücke W bewegt, bis von der Schweißstromquelle 4 ein Kontakt des Schweißdrahts 2 mit einem der Werkstücke W detektiert wird. Danach wird der Schweißdraht 2 mit einer Rückwärtsgeschwindigkeit v_{SR} wieder von den Werkstücken W wegbewegt. Die Position der Oberfläche O der Werkstücke W wird zu jedem der Zeitpunkte in der Schweißstromquelle 4 ermittelt und gespeichert. Um allfällige Schlacke vom freien Ende des Schweißdrahts 2 zu entfernen, kann ein Schlacken-Entfernungsprozess SE durchgeführt werden, wobei der Schweißstrom I auf ein Minimum gesenkt wird, und der Schweißdraht 2 mit einer schnellen wiederkehrenden Vor-/Rückwärtsbewegung zyklisch eine vorgegebene Weglänge in Richtung Werkstück W und um eine kleinere Wegstrecke wieder vom Werkstück W wegbewegt wird, sodass die Förderung des Schweißdrahtes 2 zum Werkstück W überwiegt, bis ein Kurzschluss zwischen dem Schweißdraht 2 und dem Werkstück W erkannt wird. Sollte beim Schlacken-Entfernungsprozess SE die Schlacke vom Schweißdraht 2 auch nach mehrmaligen Wiederholungen nicht entfernt werden können, kann es notwendig sein, das Ende des Schweißdrahts 2 manuell oder in einer Abschneidevorrichtung 7 abzuschneiden und dadurch von der Schlacke zu befreien. Die Manipulation des Schweißbrenners 1 zur Abschneidevorrichtung 7 kann auch vollautomatisch durch den Manipulator 3, insbesondere Schweißroboter, durchgeführt werden.

Fig. 2 zeigt schematisch die Verläufe der Schweißspannung U, des Schweißstromes I, der Vorschubgeschwindigkeit v_{d} des Schweißdrahts 2 und eines Bewegungsdiagramms des Schweißdrahts 2 relativ zum Werkstück W während eines Schlacken-Entfernungsprozesses SE. Um zu verhindern, dass aufgrund einer am Schweißdraht 2 haftenden Schlacke ein Abtastprozess AP nicht oder nicht korrekt durchgeführt werden kann, erfolgt davor bei Bedarf ein Schlacken-Entfernungsprozess SE. Dabei wird mit dem Schlacken-Entfernungsprozess SE der Schweißdraht 2 nicht kontinuierlich zum Werkstück W gefördert, sondern mit einer bestimmten Frequenz vor, also zum Werkstück W bewegt, und wieder zurück, also vom Werkstück W entfernt. Der Schweißdraht 2 wird hierbei mit relativ hoher Geschwindigkeit v_{d} eine bestimmte Wegstrecke nach vorne und eine kleinere Wegstrecke als vorwärts wieder zurückgefördert, so dass die Förderung des Schweißdrahtes 2 zum Werkstück W überwiegt. Hierbei liegt die Frequenz, mit welcher die Vor-/ Rückwärtsbewegung des Schweißdrahtes 2 durchgeführt wird, bevorzugt zwischen 50 Hz und 150 Hz. Selbstverständlich ist es auch möglich, niedrigere oder höhere Frequenzen für den Schlacken-Entfernungsprozess SE zu verwenden. Grundsätzlich ist hierbei zu beachten, dass mit der Frequenz auch die Dauer für den Schlacken-Entfernungsprozess SE definiert wird. Deshalb sind insbesondere höhere Frequenzen von Bedeutung, da dadurch die Dauer verkürzt wird. Der Schweißdraht 2 wird mit einer schnellen wiederkehrenden Vor-/Rückwärtsbewegung, beispielsweise mit einer eingestellten Frequenz von 75 Hz, bis zur Berührung mit dem Werkstück W gefördert. Wenn sich am Schweißdraht 2 Schlacke befindet, kann kein Kurzschluss KS zwischen Schweißdraht 2 und Werkstück W detektiert werden bzw. von einer Steuervorrichtung der Stromquelle 4 bzw. einer Kurzschlussüberwachung erkannt werden. Der Schweißdraht 2 wird entsprechend der eingestellten Frequenz weiter wiederkehrend zurück und wieder vor bewegt. Schließlich wird die Schlacke vom Ende des Schweißdrahts 2 gelöst und die Stromquelle 4 kann einen Kurzschluss KS durch einen Anstieg des Stromes I bzw. Einbruch der Spannung U detektieren. Danach kann der Schlacken-Entfernungsprozess SE beendet werden. Der Strom I beim Schlacken-Entfernungsprozess SE wird üblicherweise begrenzt, beispielsweise auf maximal 3 A, sodass ein Abbrennen des Schweißdrahts 2 verhindert werden kann.

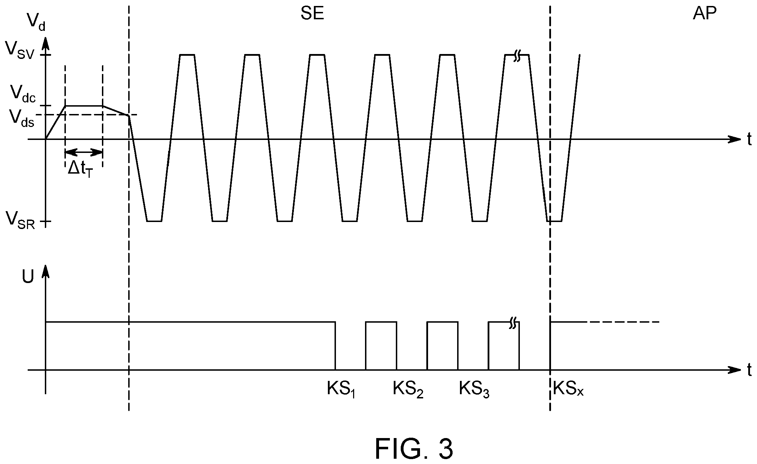

Fig. 3 zeigt schematisch die zeitlichen Verläufe der Drahtvorschubgeschwindigkeit v_{d} und der Spannung U bei einem Ausführungsbeispiel des Schlacken-Entfernungsprozesses SE. Vor der Durchführung eines Abtastprozesses AP steht der Schweißbrenner 1 über dem Werkstück W in einer Startposition. Der Schweißdraht 2 steht auch noch einige mm über der Oberfläche O des Werkstücks W. Bevor nun der Abtastprozess AP eingeleitet wird, beginnt der Schweißdraht 2 sich mit einer vorgegebenen Vorschubgeschwindigkeit v_{dc} in Richtung Werkstück W zu bewegen. Bis zum Erreichen des vorgegebenen Werts der Vorschubgeschwindigkeit v_{dc} kommt es zu einem Einschwingverhalten des Istwerts der Drahtvorschubgeschwindigkeit, weshalb vorzugsweise eine gewisse vorgegebene Zeit Δt_{T} gewartet wird, bevor die aktuelle Drahtvorschubgeschwindigkeit v_{d} gemessen wird. Dadurch kann eine ungewollte Auslösung des Schlacken-Entfernungsprozesses SE während dieser Einschwingvorgänge verhindert werden. Der Schlacken-Entfernungsprozess SE wird ausgelöst, wenn nach Ablauf der Zeit Δt_{T} die aktuelle Drahtvorschubgeschwindigkeit v_{d} unter eine vorgegebene Grenze v_{dS} gefallen ist. Dieser Grenzwert v_{dS} hat nur in der Startphase Gültigkeit. Nach Aktivierung des Schlacken-Entfernungsprozesses SE wird der Schweißdraht 2 mit hoher Beschleunigung und Kraft F zum Werkstück W und von diesem weg bewegt. Zunächst befindet sich der Schweißdraht 2 noch in der Luft, nähert sich aber immer mehr der Oberfläche O des Werkstücks W an. Danach "hämmert" der Schweißdraht 2 auf die Oberfläche O des Werkstücks W und es wird dabei die am Ende des Schweißdrahts 2 anhaftende Schlacke entfernt oder dies zumindest versucht. Um so sicher wie möglich zu erkennen, ob die Schlacke vom Schweißdraht 2 entfernt wurde, wird der Schlacken-Entfernungs-Prozess SE erst gestoppt, wenn eine definierte Anzahl n, beispielsweise 5, an zyklischen Kurzschlüssen KS detektiert wird. Nach dieser ersten Phase eines Schlacken-Entfernungsprozesses SE wird in die Abtastphase AP gewechselt. Sollte es zu gar keinen Kurzschlüssen kommen (da der Schweißdraht 2 wirklich isoliert) arbeitet der Schlacken-Entfernungsprozess SE so lange weiter, bis ein Abbruch vom Bediener oder der Robotersteuerung kommt. Hier wäre aber auch eine zeitliche Begrenzung denkbar.

Wenn es nach Beendigung des Schlacken-Entfernungsprozesses SE zu einem erneuten Einbruch der Drahtvorschubgeschwindigkeit v_{d} unter eine bestimmte festgelegte Schwelle kommt, kann der Schlacken-Entfernungsprozess SE wieder ausgelöst werden (nicht dargestellt) .

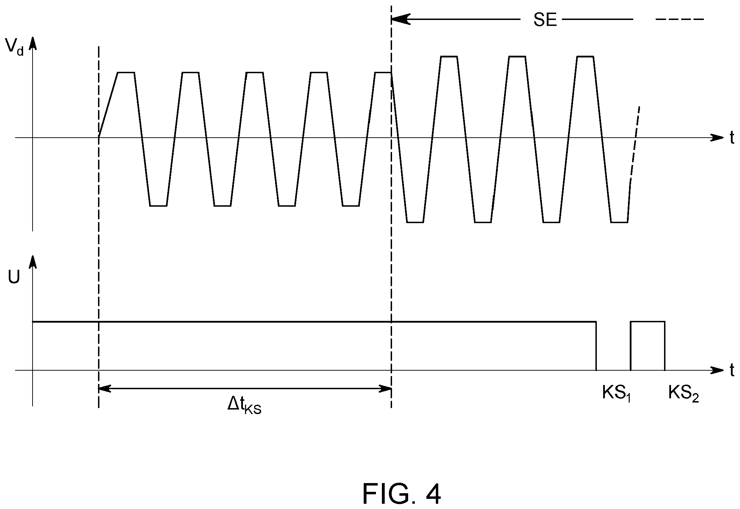

Fig. 4 zeigt schematisch die zeitlichen Verläufe der Drahtvorschubgeschwindigkeit v_{d} und der Spannung U bei einer alternativen Auslösebedingung für den Schlacken-Entfernungsprozess SE. Dabei wird vor der Anwendung eines Abtastprozesses AP der Schweißdraht 2 zum Werkstück W und wieder vom Werkstück W wegbewegt und dann ein Schlacken-Entfernungsprozess SE gestartet, wenn während einer festgelegten Zeitspanne Δt_{KS} kein Kurzschluss KS zwischen dem Schweißdraht 2 und dem Werkstück W detektiert wird. Im dargestellten Beispiel wird während dieser festgelegten Zeitspanne Δt_{KS} kein Kurzschluss KS detektiert (Spannungsabfall) und somit der Schlacken-Entfernungsprozess SE gestartet.

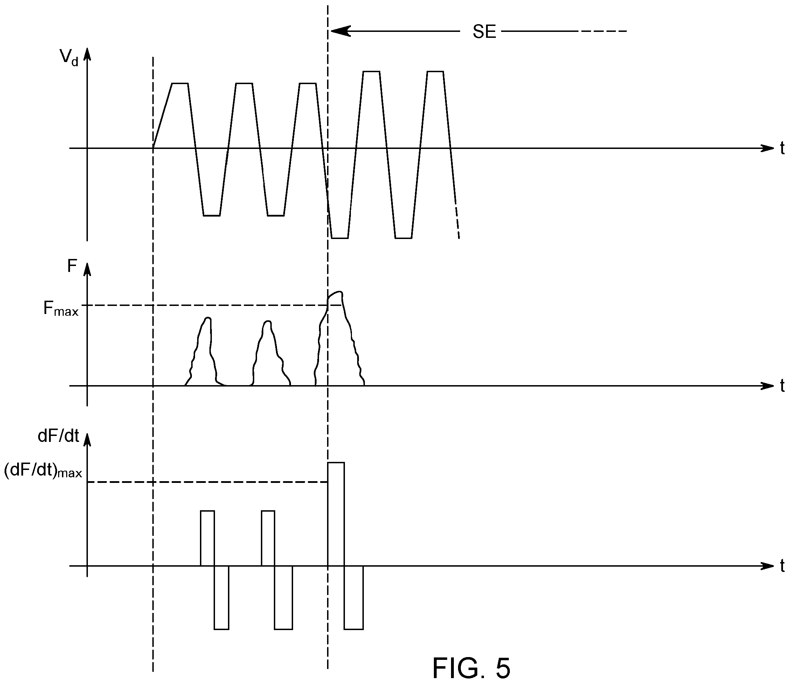

Fig. 5 zeigt schematisch die zeitlichen Verläufe der Drahtvorschubgeschwindigkeit v_{d}, der Kraft F am Schweißdraht 2 sowie der zeitlichen Änderung der Kraft dF/dt am Schweißdraht 2 bei einer weiteren Auslösebedingung für den Schlacken-Entfernungsprozess SE. Es wird darauf hingewiesen, dass der Verlauf der zeitlichen Ableitung der Kraft im untersten Diagramm stark vereinfacht dargestellt ist. Der Schlacken-Entfernungsprozess SE kann dann ausgelöst werden, wenn die Kraft F am Schweißdraht 2 über einen vorgegebenen Maximalwert Fₘₐₓ ansteigt. Alternativ oder zusätzlich kann auch dann der Schlacken-Entfernungsprozess SE gestartet werden, wenn ein gewisser Kraftanstieg dF/dt eine vorgegebene Grenze (dF/dt)ₘₐₓ überschreitet. Diese Bedingungen der Überschreitung einer maximalen Kraft Fₘₐₓ am Schweißdraht 2 oder einer maximalen zeitlichen Kraftänderung (dF/dt)ₘₐₓ am Schweißdraht kann auch während des Abtastprozesses AP und nicht vor dem Abtastprozess AP festgelegt werden. Die jeweiligen Grenzwerte für die maximale Kraft Fₘₐₓ und die maximale zeitliche Änderung der Kraft (dF/dt)ₘₐₓ werden nach Erfahrung eingestellt und können selbstverständlich für die Bedingung vor dem Abtastprozess AP und während des Abtastprozesses unterschiedlich sein.

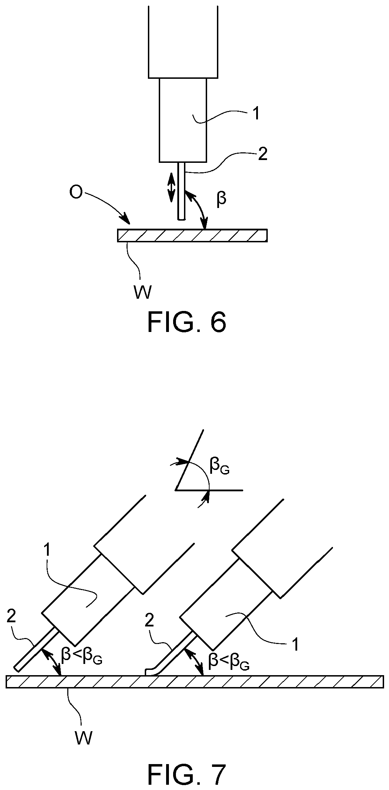

Fig. 6 zeigt einen Schweißbrenner 1 in einem für den Schlacken-Entfernungsprozess SE gewünschten Winkel β von etwa 90° zur Oberfläche O des Werkstücks W. Dies ist ein geeigneter Winkel β für den Schlacken-Entfernungsprozess SE, da hier der Schweißdraht 2 im Wesentlichen frontal auf die Oberfläche O des Werkstücks W auftrifft und daher die Wahrscheinlichkeit der Entfernung der Schlacke vom Ende des Schweißdrahts 2 sehr groß ist.

In Fig. 7 ist ein Schweißbrenner 1 in einer für den Schlacken-Entfernungsprozess SE ungeeigneten Winkellage zum Werkstück W skizziert. Hier unterschreitet der Winkel β des Schweißbrenners 1 zur Oberfläche O des Werkstücks W einen vorgegebenen Grenzwinkel β_{G} von beispielsweise 45°. In diesem Fall wird der Schweißdraht 2 bzw. dessen Ende beim Schlacken-Entfernungsprozess SE verbogen bzw. abgelenkt und es kann die Entfernung der Schlacke nicht sichergestellt werden. Bei Unterschreitung des Grenzwinkels β, zwischen Schweißbrenner 1 und Schweißdraht 2 kann daher der Schlacken-Entfernungsprozess SE auch automatisch deaktiviert werden, da eine Schlacken-Entfernung nicht sichergestellt werden kann.

Die Lage des Schweißbrenners 1 könnte auch automatisch durch entsprechende Sensoren, beispielsweise Gyro-Sensoren und allenfalls einer Detektion einer im Schweißbrenner 1 befindlichen Brenneridentifikation BID zur Berücksichtigung der Brennergeometrie erfasst werden und daraus der Winkel β des Schweißbrenners 1 bzw. Schweißdrahts 2 zur Oberfläche O des Werkstücks W errechnet werden. Der Schlacken-Entfernungsprozess SE kann dann bei sehr flachen Anstellwinkeln des Schweißbrenners 1 automatisch deaktiviert werden, um Fehlfunktionen und Verformungen des Schweißdrahts 2 auszuschließen. Dabei kann natürlich eine Fehlermeldung an den Benutzer bzw. Schweißer ausgegeben werden.

Bei bestimmten Geometrien von Schweißbrennern 1 oder speziellen Geometrien mit hoher Reibung wäre es des Öfteren nötig, eine Vielzahl der Reglerparameter für die zuverlässige Auslösung und Funktion des Schlacken-Entfernungsprozesses SE speziell anzupassen. Auch dies könnte durch eine im Schweißbrenner 1 befindliche Brenneridentifikation BID automatisch durchgeführt werden. Somit würden für jeden Typ des Schweißbrenners 1 automatisch die optimalen Reglerparamter des Schlacken-Entfernungsprozesses SE zur Verfügung stehen.

## Patentansprüche

1. Verfahren zum Abtasten der Oberfläche (O) metallischer Werkstücke (W), wobei während eines Abtastprozesses (AP) ein Schweißbrenner (1) mit einem abschmelzenden Schweißdraht (2) über die Oberfläche (O) des Werkstücks (W) bewegt wird, und zu vorgegebenen Zeitpunkten (tᵢ) der Schweißdraht (2) mit einer Vorwärtsgeschwindigkeit (v_{SV}) zur Oberfläche (O) des Werkstücks (W) bewegt wird, bis von einer Schweißstromquelle (4) ein Kontakt des Schweißdrahts (2) mit dem Werkstück (W) detektiert wird, und der Schweißdraht (2) anschließend mit einer Rückwärtsgeschwindigkeit (v_{SR}) wieder vom Werkstück (W) wegbewegt wird, **dadurch gekennzeichnet, dass** vor dem Abtastprozess (AP) ein Schlacken-Entfernungsprozess (SE) zur Entfernung von Schlacke am Ende des Schweißdrahtes (2) durchgeführt wird, wobei mit Beginn des Schlacken-Entfernungsprozesses (SE) der Schweißstrom (I) auf ein Minimum gesenkt wird, und der Schweißdraht (2) mit einer schnellen wiederkehrenden Vor-/Rückwärtsbewegung zyklisch eine vorgegebene Weglänge in Richtung Werkstück (W) und um eine kleinere Wegstrecke wieder vom Werkstück (W) wegbewegt wird, sodass die Förderung des Schweißdrahtes (2) zum Werkstück (W) überwiegt, und beim Detektieren keines Kurzschlusses (KS) zwischen dem Schweißdraht (2) und dem Werkstück (W) der Schlacken-Entfernungsprozess (SE) wiederholt wird, und beim Detektieren mehrerer Kurzschlüsse (KS) zwischen dem Schweißdraht (2) und dem Werkstück (W) hintereinander der Schlacken-Entfernungsprozess (SE) beendet wird, wobei beim Sinken der Drahtvorschubgeschwindigkeit (v_{d}) unter einen vorgegebenen Schwellwert (v_{dS}) beim Bewegen des Schweißdrahts (2) mit einer vorgegebenen Drahtvorschubgeschwindigkeit (v_{dc}) in Richtung Werkstück (W) vor dem Abtastprozess (AP) der Schlacken-Entfernungsprozess (SE) gestartet wird.

2. Verfahren nach Anspruch 1, **dadurch gekennzeichnet, dass** beim Detektieren von fünf Kurzschlüssen (KS) zwischen dem Schweißdraht (2) und dem Werkstück (W) hintereinander der Schlacken-Entfernungsprozess (SE) beendet wird.

3. Verfahren nach Anspruch 1 oder 2, **dadurch gekennzeichnet, dass** bei Detektieren keines Kurzschlusses (KS) zwischen dem Schweißdraht (2) und dem Werkstück (W) während einer festgelegten Zeitspanne (Δt_{KS}) vor dem Abtastprozess (AP) der Schlacken-Entfernungsprozess (SE) gestartet wird.

4. Verfahren nach einem der Ansprüche 1 bis 3, **dadurch gekennzeichnet, dass** vor der Messung, ob die Drahtvorschubgeschwindigkeit (v_{d}) unter den vorgegebenen Schwellwert (v_{dS}) sinkt, eine vorgegebene Zeitdauer (Δt_{T}) gewartet wird.

5. Verfahren nach einem der Ansprüche 1 bis 4, **dadurch gekennzeichnet, dass** beim Überschreiten eines vorgegebenen Maximalwerts (Fₘₐₓ) der Kraft (F) am Schweißdraht (2) der Schlacken-Entfernungsprozess (SE) gestartet wird.

6. Verfahren nach einem der Ansprüche 1 bis 5, **dadurch gekennzeichnet, dass** beim Überschreiten eines vorgegebenen Schwellwerts ((dF/dt)ₘₐₓ) der zeitlichen Änderung der Kraft (dF/dt) am Schweißdraht (2) der Schlacken-Entfernungsprozess (SE) gestartet wird.

7. Verfahren nach einem der Ansprüche 1 bis 6, **dadurch gekennzeichnet, dass** beim Sinken der Drahtvorschubgeschwindigkeit (v_{d}) während des Abtastprozesses (AP) unter einen vorgegebenen Schwellwert der Schlacken-Entfernungsprozess (SE) gestartet wird.

8. Verfahren nach einem der Ansprüche 1 bis 7, **dadurch gekennzeichnet, dass** beim Überschreiten eines vorgegebenen Maximalwerts (Fₘₐₓ) der Kraft (F) am Schweißdraht (2) während des Abtastprozesses (AP) der Schlacken-Entfernungsprozess (SE) gestartet wird.

9. Verfahren nach einem der Ansprüche 1 bis 8, **dadurch gekennzeichnet, dass** beim Überschreiten eines vorgegebenen Schwellwerts ((dF/dt)ₘₐₓ) der zeitlichen Änderung der Kraft (dF/dt) am Schweißdraht (2) während des Abtastprozesses (AP) der Schlacken-Entfernungsprozess (SE) gestartet wird.

10. Verfahren nach einem der Ansprüche 1 bis 9, **dadurch gekennzeichnet, dass** der Anstellwinkel (β) des Schweißbrenners (1) zur Oberfläche (O) des Werkstücks (W) ermittelt wird, und beim Unterschreiten eines vorgegebenen Grenzwerts des Anstellwinkels (β_{G}) der Schlacken-Entfernungsprozess (SE) deaktiviert wird.

11. Verfahren nach einem der Ansprüche 1 bis 10, **dadurch gekennzeichnet, dass** beim Detektieren keines stabilen Kurzschlusses (KS) zwischen Schweißdraht (2) und Werkstück (W) nach mehreren Wiederholungen des Schlacken-Entfernungsprozesses (SE), insbesondere nach 15 Wiederholungen, eine Fehlermeldung ausgegeben wird.

12. Verfahren nach Anspruch 11, **dadurch gekennzeichnet, dass** nach Ausgabe der Fehlermeldung das Ende des Schweißdrahts (2) in einer Abschneidevorrichtung (7) abgeschnitten wird.

## Claims

1. Method for scanning the surface (O) of metal workpieces (W), a welding torch (1) having a consumable welding wire (2) being moved over the surface (O) of the workpiece (W) during a scanning process (AP), and at predetermined times (tᵢ) the welding wire (2) being moved at a forward speed (vsv) toward the surface (O) of the workpiece (W) until contact of the welding wire (2) with the workpiece (W) is detected by a welding current source (4), and the welding wire (2) subsequently being moved away from the workpiece (W) again at a reverse speed (v_{SR}), **characterized in that** prior to the scanning process (AP), a slag-removal process (SE) is carried out to remove slag at the end of the welding wire (2), the welding current (1) being reduced to a minimum at the beginning of the slag-removal process (SE), and the welding wire (2) being moved in a cyclical manner, with a rapid recurrent forward/backward movement, over a predetermined path length toward the workpiece (W) and over a shorter path distance away from the workpiece (W) again, so that the conveying of the welding wire (2) toward the workpiece (W) is predominant, and the slag-removal process (SE) being repeated when no short-circuit (KS) is detected between the welding wire (2) and the workpiece (W), and the slag removal process (SE) being terminated when a plurality of short circuits (KS) are detected consecutively between the welding wire (2) and the workpiece (W), the slag-removal process (SE) being started when the wire feed rate (v_{d}) drops below a predetermined threshold value (v_{dS}) when moving the welding wire (2) at a predetermined wire feed rate (v_{dc}) toward the workpiece (W) prior to the scanning process (AP).

2. Method according to claim 1, **characterized in that** the slag-removal process (SE) is terminated when five short circuits (KS) are detected consecutively between the welding wire (2) and the workpiece (W).

3. Method according to claim 1 or 2, **characterized in that** the slag-removal process (SE) is started prior to the scanning process (AP) when no short-circuit (KS) is detected between the welding wire (2) and the workpiece (W) during a defined period of time (Δt_{KS}).

4. Method according to any of claims 1 to 3, **characterized in that** waiting takes place for a predetermined time period (Δt_{T}) prior to measuring whether the wire feed rate (v_{d}) is dropping below the predetermined threshold value (v_{dS})

5. Method according to any of claims 1 to 4, **characterized in that** the slag-removal process (SE) is started when a predetermined maximum value (Fₘₐₓ) of force (F) on the welding wire (2) is exceeded.

6. Method according to any of claims 1 to 5, **characterized in that** the slag-removal process (SE) is started when a predetermined threshold value ((dF/dt)ₘₐₓ) of the change over time of the force (dF/dt) on the welding wire (2) is exceeded.

7. Method according to any of claims 1 to 6, **characterized in that** the slag-removal process (SE) is started when the wire feed rate (v_{d}) drops below a predetermined threshold value during the scanning process (AP).

8. Method according to any of claims 1 to 7, **characterized in that** the slag-removal process (SE) is started when a predetermined maximum value (Fₘₐₓ) of the force (F) on the welding wire (2) is exceeded during the scanning process (AP).

9. Method according to any of claims 1 to 8, **characterized in that** the slag-removal process (SE) is started when a predetermined threshold value ((dF/dt)ₘₐₓ) of the change over time of the force (dF/dt) on the welding wire (2) is exceeded during the scanning process (AP).

10. Method according to any of claims 1 to 9, **characterized in that** the inclination angle (**β**) the welding torch (1) with respect to the surface (O) of the workpiece (W) is determined, and the slag-removal process (SE) is deactivated when a predetermined limit value of the inclination angle (**β**_{G}) is not met.

11. Method according to any of claims 1 to 10, **characterized in that** an error message is output when no stable short circuit (KS) is detected between the welding wire (2) and workpiece (W) after several repetitions of the slag-removal process (SE), in particular after 15 repetitions.

12. Method according to claim 11, **characterized in that** the end of the welding wire (2) is cut off in a cutting device (7) after the error message has been output.

## Revendications

1. Procédé de balayage de la surface (O) de pièces à usiner (W) métalliques, dans lequel un chalumeau à souder (1) avec un fil à souder (2) en fusion est déplacé par-dessus la surface (O) de la pièce à usiner (W) pendant un processus de balayage (AP), et en des instants prédéfinis (tᵢ) le fil à souder (2) est déplacé vers la surface (O) de la pièce à usiner (W) à une vitesse de marche avant (v_{SV}) jusqu'à ce qu'un contact du fil à souder (2) avec la pièce à usiner (W) soit détecté par une source de courant de soudage (4), et le fil à souder (2) est ensuite à nouveau éloigné de la pièce à usiner (W) à une vitesse de marche arrière (v_{SR}), **caractérisé en ce qu'**un processus d'enlèvement de scories (SE) pour l'enlèvement d'une scorie à l'extrémité du fil à souder (2) est exécuté avant le processus de balayage (AP), dans lequel le courant de soudage (I) est réduit à un minimum avec le démarrage du processus d'enlèvement de scories (SE), et le fil à souder (2) est à nouveau éloigné de la pièce à usiner (W) de façon cyclique avec un déplacement de marche avant/arrière récurrent rapide d'une longueur de trajet prédéfinie en direction de la pièce à usiner (W) et d'un parcours de trajet plus petit, de sorte que l'avancement du fil à souder (2) vers la pièce à usiner (W) prédomine, et dans le cas de la détection d'une absence de court-circuit (KS) entre le fil à souder (2) et la pièce à usiner (W) le processus d'enlèvement de scories (SE) est renouvelé, et dans le cas de la détection de plusieurs courts-circuits (KS) consécutifs entre le fil à souder (2) et la pièce à usiner (W) le processus d'enlèvement de scories (SE) est terminé, dans lequel le processus d'enlèvement de scories (SE) est démarré dans le cas de la réduction de la vitesse d'avance de fil (v_{d}) sous une valeur seuil (v_{dS}) prédéfinie lors du déplacement du fil à souder (2) à une vitesse d'avance de fil (v_{dc}) prédéfinie en direction de la pièce à usiner (W) avant le processus de balayage (AP).

2. Procédé selon la revendication 1, **caractérisé en ce que** dans le cas de la détection de cinq courts-circuits (KS) consécutifs entre le fil à souder (2) et la pièce à usiner (W) le processus d'enlèvement de scories (SE) est terminé.

3. Procédé selon la revendication 1 ou 2, **caractérisé en ce que** le processus d'enlèvement de scories (SE) est démarré dans le cas de la détection d'une absence de court-circuit (KS) entre le fil à souder (2) et la pièce à usiner (W) pendant un intervalle de temps prédéfini (Δt_{KS}) avant le processus de balayage (AP).

4. Procédé selon l'une des revendications 1 à 3, **caractérisé en ce qu'**une durée (Δt_{T}) prédéfinie est maintenue en attente avant la mesure pour savoir si la vitesse d'avance de fil (v_{d}) tombe sous la valeur seuil (v_{dS}) prédéfinie.

5. Procédé selon l'une des revendications 1 à 4, **caractérisé en ce que** le processus d'enlèvement de scories (SE) est démarré dans le cas du dépassement par le haut d'une valeur maximale (Fₘₐₓ) prédéfinie de la puissance (F) au niveau du fil à souder (2).

6. Procédé selon l'une des revendications 1 à 5, **caractérisé en ce que** le processus d'enlèvement de scories (SE) est démarré dans le cas du dépassement par le haut d'une valeur seuil ((dF/dt)ₘₐₓ) prédéfinie de la modification dans le temps de la puissance (dF/dt) au niveau du fil à souder (2).

7. Procédé selon l'une des revendications 1 à 6, **caractérisé en ce que** le processus d'enlèvement de scories (SE) est démarré dans le cas de la réduction de la vitesse d'avance de fil (v_{d}) pendant le processus de balayage (AP) sous une valeur seuil prédéfinie.

8. Procédé selon l'une des revendications 1 à 7, **caractérisé en ce que** le processus d'enlèvement de scories (SE) est démarré dans le cas du dépassement par le haut d'une valeur maximale (Fₘₐₓ) prédéfinie de la puissance (F) au niveau du fil à souder (2) pendant le processus de balayage (AP).

9. Procédé selon l'une des revendications 1 à 8, **caractérisé en ce que** le processus d'enlèvement de scories (SE) est démarré dans le cas du dépassement par le haut d'une valeur seuil ((dF/dt)ₘₐₓ) prédéfinie de la modification dans le temps de la puissance (dF/dt) au niveau du fil à souder (2) pendant le processus de balayage (AP).

10. Procédé selon l'une des revendications 1 à 9, **caractérisé en ce que** l'angle d'incidence (β) du chalumeau à souder (1) vers la surface (O) de la pièce à usiner (W) est établi et le processus d'enlèvement de scories (SE) est désactivé dans le cas du dépassement par le bas d'une valeur limite prédéfinie de l'angle d'incidence (β_{G}).

11. Procédé selon l'une des revendications 1 à 10, **caractérisé en ce qu'**un message d'erreur est émis dans le cas de la détection d'une absence de court-circuit (KS) stable entre le fil à souder (2) et la pièce à usiner (W) après plusieurs renouvellements du processus d'enlèvement de scories (SE), en particulier après 15 renouvellements.

12. Procédé selon la revendication 11, **caractérisé en ce qu'**après l'émission du message d'erreur l'extrémité du fil à souder (2) est découpée dans un dispositif de découpe (7).
